# EUROPÄISCHE PATENTSCHRIFT

(11) **EP 3 111 161 B1**
(45) Veröffentlichungstag und Bekanntmachung des Hinweises auf die Patenterteilung: **08.08.2018**
(21) Anmeldenummer: 15709120.8
(22) Anmeldetag: 25.02.2015
(51) Int. Cl.: G01B 11/02, B23K 26/03, G01B 11/06

(54) **VERFAHREN UND VORRICHTUNG ZUM OPTISCHEN BESTIMMEN EINES ABSTANDES**
METHOD AND DEVICE FOR OPTICALLY DETERMINING A DISTANCE
PROCÉDÉ ET DISPOSITIF DE DÉTERMINATION OPTIQUE D'UNE DISTANCE

(30) Priorität: 28.02.2014 DE 102014203645
(43) Veröffentlichungstag der Anmeldung: 04.01.2017
(73) Patentinhaber: Trumpf Werkzeugmaschinen GmbH + Co. KG, 71254 Ditzingen (DE)
(72) Erfinder: MILICH, Andreas, 71282 Hemmingen (DE); REGAARD, Boris, 70499 Stuttgart (DE)
(74) Vertreter: Kohler Schmid Möbus Patentanwälte
(86) Internationale Anmeldenummer: PCT/EP2015/053894
(87) Internationale Veröffentlichungsnummer: WO 2015/128353

(56) Entgegenhaltungen:
- US-A- 5 463 202
- US-A1- 2006 091 298
- US-A1- 2013 319 980
- US-A1- 2014 049 471

## Beschreibung

Die vorliegende Erfindung betrifft ein Verfahren zum optischen Bestimmen eines Abstandes zwischen einer Öffnung und einer Referenzfläche. Die Erfindung betrifft auch eine zugehörige Vorrichtung zur Bestimmung eines Abstandes zwischen einer an der Vorrichtung gebildeten Öffnung und einer Referenzfläche. Bei der Vorrichtung kann es sich beispielsweise um einen Bearbeitungskopf, insbesondere um einen Laserbearbeitungskopf, oder um eine Bearbeitungsmaschine, beispielsweise um eine Laserbearbeitungsmaschine, handeln.

Zur Bestimmung eines Abstandes zwischen einem Bearbeitungskopf und einer Werkstückoberfläche sind kapazitive Abstandsmessverfahren bekannt, bei denen zur Bestimmung des Abstandes eine abstandsabhängige Kapazität zwischen dem Bearbeitungskopf bzw. einem mit diesem starr verbundenen Bauteil, z.B. einer Bearbeitungsdüse, und dem Werkstück bestimmt wird. Bei derartigen kapazitiven Abstandsmessverfahren ist typischer Weise eine Elektronik in der Nähe der Bearbeitungsdüse angeordnet. Auch ist typischer Weise eine Kalibrierung der Abstandssensorik notwendig und der bei der Messung der Kapazität berücksichtigte Bereich auf der Werkstückoberfläche ist vergleichsweise groß, so dass ggf. dort vorhandene Störkonturen das Messergebnis beeinflussen können.

Aus der DE 100 56 329 A1 ist ein optisches Abstandsmessverfahren bekannt geworden, bei dem zur Erfassung des Abstandes eines Bearbeitungskopfes einer Werkstückbearbeitungsanlage von der Oberfläche eines zu bearbeitenden Werkstücks vorgesehen ist, dass ein Messobjekt auf eine Oberfläche abgebildet wird und dass das Bild des Messobjektes auf der Oberfläche auf eine Empfangsanordnung abgebildet wird, in der das einfallende Bild einer dem Messobjekt entsprechenden Ortsfilterung unterzogen wird. Der ortsgefilterte Lichtstrom wird für zumindest zwei Wellenlängenbereiche erfasst, um Lichtstrom-Messsignale zu liefern, die mit den Wellenlängenbereichen zugeordneten SollWerten verglichen werden, die einer vorgegebenen Soll-Lage der Oberfläche entsprechen, um ein dem Abstand von der Soll-Lage entsprechendes Ausgangssignal zu erzeugen. Die für die Abbildung des Messobjektes verwendete Abbildungsoptik weist typischer Weise einen Farbfehler auf, so dass die Empfangsanordnung anhand der Lichtstrom-Messsignale in den zumindest zwei Wellenlängenbereichen den Abstand von der Soll-Lage bestimmen kann.

In der DE 10 2011 016 519 A1 sind ein Verfahren und eine Vorrichtung zum Steuern der Bearbeitung eines Werkstücks mittels eines hochenergetischen Bearbeitungsstrahls beschrieben, bei dem der Bearbeitungsstrahl und/oder ein Beleuchtungsstrahl durch eine Linse hindurchtritt, die zum Verschieben einer Auftreffstelle des Bearbeitungsstrahls auf das Werkstück und/oder eines vom Beleuchtungsstrahl auf dem Werkstück erzeugten Beleuchtungsfeldes senkrecht zu ihrer optischen Achse bewegt werden kann. Beispielsweise kann durch das Bewegen der Linse das Beleuchtungsfeld in Überdeckung mit der Auftreffstelle gebracht werden. In einem Beispiel ist ein Sensor bzw. eine Überwachungskamera zur Erzeugung eines elektronisch auswertbaren Bildes vorgesehen, deren Abbildungsstrahlengang durch die Linse auf die Auftreffstelle fokussiert wird. Jede der US 5 463 202 A, US 2013/319980 A1, US2014/049471 A1 und US 2006/091298 A1 offenbart eine Vorrichtung zur optischen Bestimmung eines Abstandes zwischen einer Öffnung und einer Referenzfläche.

### Aufgabe der Erfindung

Der Erfindung liegt die Aufgabe zugrunde, ein Verfahren und eine Vorrichtung bereitzustellen, welche eine einfache und zuverlässige optische Bestimmung des Abstandes zwischen einer Öffnung, an einer Bearbeitungsdüse, und einer Referenzfläche, insbesondere einer Werkstückoberfläche, ermöglichen.

### Gegenstand der Erfindung

Diese Aufgabe wird erfindungsgemäß gelöst durch ein Verfahren nach dem Anspruch 1. Erfindungsgemäß wird vorgeschlagen, den mindestens einen Beleuchtungsstrahl nicht senkrecht, sondern unter einem Winkel, d.h. schräg, durch die Öffnung hindurch treten zu lassen. Auf diese Weise entsteht auf der von der Öffnung beabstandeten Referenzfläche ein lateraler Versatz des von dem Beleuchtungsstrahl beleuchteten Bereichs relativ zu der Öffnung, der vom Abstand zwischen der Öffnung und der Referenzfläche (linear) abhängig ist. Bei der Aufnahme eines Bildes der Referenzfläche durch die Öffnung hindurch kann der Versatz zwischen der Randkontur der Öffnung und dem beleuchteten Bereich ermittelt werden, da zwischen der Randkontur und dem beleuchteten Bereich an der Referenzfläche ein Schatten des die Öffnung begrenzenden Bauteils, d.h. die Kante einer Bearbeitungsdüse, gebildet wird. Der Beleuchtungsstrahl wird typischer Weise von der Randkontur der Öffnung, beispielsweise von der Innenkontur bzw. der Kante der Bearbeitungsdüse, begrenzt, um den Schattenwurf zu erzeugen.

Idealer Weise tritt der Beleuchtungsstrahl unter genau einem Winkel (in Grad) durch die Öffnung hindurch, wobei aufgrund der endlichen Ausdehnung des den Beleuchtungsstrahl bildenden Strahlenbündels ggf. die Winkel der Randstrahlen des Strahlenbündels geringfügig (im mrad-Bereich) voneinander abweichen können. Anhand des Versatzes sowie des bekannten Winkels, mit dem der Beleuchtungsstrahl durch die Öffnung hindurch tritt, kann der Abstand durch Triangulation bestimmt werden. Alternativ zu einer direkten Ermittlung des Versatzes zwischen dem beleuchteten Bereich und der Randkontur in dem aufgenommenen Bild besteht auch die Möglichkeit, die Breite des beleuchteten Bereichs in dem aufgenommenen Bild zu ermitteln und anhand der bekannten Geometrie bzw. der Breite der Öffnung den Versatz bzw. den Abstand zu ermitteln. Hierbei kann zur Bestimmung des Abstandes die ermittelte Breite des beleuchteten Bereichs direkt, d.h. ohne eine geometrische Bestimmung des Versatzes, mit dem Abstand in Beziehung gesetzt werden. Im Sinne dieser Anmeldung wird unter dem Bestimmen des Abstandes anhand des Versatzes auch eine solche Vorgehensweise verstanden. Die Referenzoberfläche, bei der es sich beispielsweise um eine Werkstückoberfläche handeln kann, verläuft typischer Weise parallel zu der Ebene, in welcher die Öffnung gebildet ist.

Bei der Erfindung ist die Öffnung an einer Bearbeitungsdüse gebildet und das Bild wird entlang einer Beobachtungsrichtung koaxial zu einer Düsenachse der Bearbeitungsdüse aufgenommen. In diesem Fall wird die Randkontur der Öffnung durch die Innenkontur der Bearbeitungsdüse gebildet. Dies ist günstig, da die Bearbeitungsdüse an der Vorrichtung, an der sie angebracht ist, eine definierte Lage bzw. Position aufweist, so dass die eine Messkante bildende Innenkontur ebenfalls eine definierte Lage relativ zu einer Bilderfassungseinrichtung bzw. einem Detektor aufweist und somit eine aufwändige Justage nicht erforderlich ist. Die Beobachtung durch die Bearbeitungsdüse hindurch erfolgt in diesem Fall koaxial zur Düsenachse, d.h. richtungsunabhängig. Dies ist günstig, um anhand des lateralen Versatzes auf einfache Weise den Abstand bestimmen zu können. Die Düsenachse fällt typischer Weise mit der Strahlachse eines Hochenergiestrahls, beispielsweise eines Laserstrahls oder eines Plasmastrahls, zusammen, der durch die Bearbeitungsdüse auf ein Werkstück fokussiert wird. Die Beobachtung erfolgt in diesem Fall auch koaxial zum Hochenergiestrahl.

Die Bearbeitungsdüse, genauer gesagt deren Innenkontur, kann konisch ausgebildet sein. In diesem Fall wird unter der Öffnung der Bearbeitungsdüse der Bereich entlang der Düsenachse verstanden, bei dem der Innenquerschnitt eine minimale Ausdehnung quer zur Düsenachse aufweist, d.h. bei einer runden Düsengeometrie der Bereich mit minimalem Innendurchmesser, der typischer Weise dem Werkstück zugewandt ist.

Bei einer weiteren Variante wird die Öffnung von dem mindestens einen Beleuchtungsstrahl vollständig ausgeleuchtet. Dies ist insbesondere für den Fall günstig, dass die Bestimmung des Abstandes anhand der Breite des beleuchteten Bereichs auf der Referenzoberfläche erfolgt.

Bei einer weiteren Variante beträgt der Winkel, unter dem der Beleuchtungsstrahl durch die Öffnung hindurch tritt, zwischen 2,5° und 25°, bevorzugt zwischen 2,5° und 10°. Für die präzise Bestimmung des Abstandes ist es günstig, wenn der Winkel des Beleuchtungsstrahls zur Öffnung nicht zu klein gewählt wird. Ist die Öffnung an einer Bearbeitungsdüse mit konischer Innenkontur gebildet, entspricht der maximale Winkel, unter dem der Beleuchtungsstrahl durch die Öffnung treten kann, in der Regel dem Winkel, den die konische Innenkontur der Bearbeitungsdüse zur Düsenlängsachse aufweist. Insbesondere kann der Winkel, unter dem der Beleuchtungsstrahl durch die Öffnung tritt, genau dem Winkel entsprechen, den die konische Innenkontur der Bearbeitungsdüse mit der Düsenlängsachse einschließt. In diesem Fall verläuft der Beleuchtungsstrahl entlang der Innenkontur der Bearbeitungsdüse und parallel zu dieser.

Bei einer weiteren Variante treten mindestens zwei Beleuchtungsstrahlen gleichzeitig oder zeitlich versetzt aus unterschiedlichen Beleuchtungsrichtungen und/oder unter unterschiedlichen Winkeln durch die Öffnung hindurch. Durch die Beleuchtung aus unterschiedlichen Beleuchtungsrichtungen kann die Messsicherheit bei der Bestimmung des Abstandes erhöht werden. Durch die Wahl von (betragsmäßig) unterschiedlichen Winkeln kann die Auflösung bzw. der Messbereich verändert werden. Je nach Anwendung kann eine gleichzeitige oder eine zeitlich versetzte Beleuchtung der Öffnung vorteilhaft sein. In letzterem Fall kann aus zwei oder mehr Bildern, die zeitlich versetzt aufgenommen werden und bei denen die Beleuchtung aus jeweils unterschiedlichen Beleuchtungsrichtungen und/oder unter unterschiedlichen Winkeln erfolgt, ein Mittelwert erzeugt werden, um die Präzision bei der Ermittlung des Versatzes bzw. der Breite des beleuchteten Bereichs auf der Referenzfläche und somit des zu bestimmenden Abstandes zu erhöhen. Die unterschiedlichen Beleuchtungsrichtungen beziehen sich auf die Umfangsrichtung der Öffnung, d.h. Beleuchtungsstrahlen aus unterschiedlichen Beleuchtungsrichtungen treten an unterschiedlichen Orten entlang des Umfangs der Öffnung durch diese hindurch. Für die möglichst präzise Bestimmung des Abstandes ist es günstig, wenn die Beleuchtungsrichtungen, unter denen die Beleuchtung der Referenzfläche vorgenommen wird, sich möglichst stark voneinander unterscheiden. Ein großer Unterschied zwischen den Beleuchtungsrichtungen kann insbesondere erhalten werden, wenn die beiden Beleuchtungsstrahlen an zwei sich diametral gegenüber liegenden Orten durch die Öffnung hindurch treten bzw. in derselben Ebene liegen.

In einer weiteren Ausführungsform tritt der mindestens eine Beleuchtungsstrahl vor dem Erreichen der Öffnung außermittig, d.h. versetzt zur einer zentralen Achse bzw. einer optischen Achse, durch eine Fokussiereinrichtung hindurch. Als Fokussiereinrichtung dient typischer Weise eine oder mehrere Fokussierlinsen oder ein Fokussierspiegel, insbesondere ein Off-Axis-Parabolspiegel. Trifft der Beleuchtungsstrahl außermittig auf die Fokussiereinheit, beispielsweise versetzt zur optischen Achse einer Fokussierlinse, wird der Laserstrahl zur optischen Achse gebrochen, so dass dieser nach dem Durchlaufen der Fokussierlinse einen Winkel zur optischen Achse einschließt. Stimmt die optische Achse der Fokussiereinrichtung mit der Düsenlängsachse der Bearbeitungsdüse überein, tritt der Beleuchtungsstrahl wie gewünscht schräg, d.h. unter einem Winkel, durch die Öffnung der Bearbeitungsdüse hindurch. Um zu erreichen, dass der Beleuchtungsstrahl einen ausreichend großen Winkel zur optischen Achse der Fokussiereinrichtung aufweist, kann der Beleuchtungsstrahl insbesondere in einem Randbereich auf die Fokussiereinheit, z.B. auf eine Linse, eingestrahlt werden.

Bei einer Weiterbildung verläuft der mindestens eine Beleuchtungsstrahl vor dem Erreichen der Fokussiereinrichtung parallel zu einem durch die Öffnung hindurch tretenden Hochenergiestrahl. Bei dieser Variante trifft der Beleuchtungsstrahl parallel bzw. koaxial zum Hochenergiestrahl auf die Fokussiereinrichtung. Der Hochenergiestrahl trifft typischer Weise mittig auf die Fokussiereinrichtung, d.h. dessen Strahlachse stimmt mit der optischen Achse der Fokussiereinrichtung überein, während der Beleuchtungsstrahl versetzt zur Strahlachse auf die Fokussiereinrichtung trifft.

Bei einer Weiterbildung wird der mindestens eine Beleuchtungsstrahl an einem Lochspiegel zum Durchtritt des Hochenergiestrahls in eine Richtung parallel zum Hochenergiestrahl umgelenkt. Mit Hilfe eines Lochspiegels, auch Scraper-Spiegel genannt, d.h. eines Spiegels, der eine typischer Weise zentrische Öffnung aufweist, durch die der Hochenergiestrahl hindurch treten kann, können die Beleuchtungsstrahlen auf besonders einfache Weise parallel zum Laserstrahl ausgerichtet werden, indem diese in den typischer Weise planen Randbereich des Lochspiegels eingestrahlt werden. Die Beleuchtungsstrahlen verlaufen nach der Umlenkung versetzt zur Strahlachse des Hochenergiestrahls. Der Lochspiegel kann auch dazu dienen, den parallel zum Hochenergiestrahl verlaufenden Beobachtungsstrahlengang zu einer Bilderfassungseinrichtung, typischer Weise einer Kamera, zur Aufnahme des mindestens einen Bildes umzulenken. An Stelle eines Lochspiegels können auch andere optische Einrichtungen verwendet werden, um den mindestens einen Beleuchtungsstrahl parallel zum Hochenergiestrahl auszurichten, beispielsweise teildurchlässige Spiegel, insbesondere dichroitische Spiegel.

Bei einer weiteren Variante ist die Referenzfläche eine Werkstückoberfläche. In diesem Fall kann die Bestimmung des Abstandes zwischen der Vorrichtung, die typischer Weise als Bearbeitungskopf, insbesondere als Laserbearbeitungskopf, ausgebildet ist, während der Bearbeitung des Werkstücks erfolgen. Auf diese Weise kann der Abstand ggf. mittels einer geeigneten Steuereinrichtung oder Regeleinrichtung korrigiert werden.

Die Erfindung betrifft auch ein Computerprogrammprodukt, welches zur Durchführung aller Schritte des oben beschriebenen Verfahrens ausgebildet ist, wenn das Computerprogramm auf einer Datenverarbeitungsanlage abläuft. Bei der Datenverarbeitungsanlage kann es sich beispielsweise um eine Steuereinrichtung, eine Regeleinrichtung oder um eine Auswerteeinrichtung handeln, die ggf. in der Vorrichtung untergebracht ist, an der die Öffnung gebildet ist. Es kann sich aber auch um eine externe Einrichtung handeln, die beispielsweise Teil einer Bearbeitungsmaschine ist.

Ein weiterer Aspekt der Erfindung betrifft eine Vorrichtung der eingangs genannten Art, umfassend: eine Beleuchtungseinrichtung zur Erzeugung mindestens eines Beleuchtungsstrahls, der unter einem von 0° verschiedenen Winkel durch die Öffnung hindurch tritt, um die Referenzfläche zu beleuchten, eine Bilderfassungseinrichtung zur Aufnahme mindestens eines Bildes der Referenzfläche mittels eines durch die Öffnung hindurch verlaufenden Beobachtungsstrahlengangs, sowie eine Auswerteeinrichtung, die zur Bestimmung des Abstandes anhand eines Versatzes zwischen einem von dem mindestens einen Beleuchtungsstrahl beleuchteten Bereich der Referenzfläche und einer Randkontur der Öffnung in dem mindestens einen aufgenommenen Bild ausgebildet bzw. programmiert ist.

Die Vorrichtung kann beispielsweise als Bearbeitungskopf, insbesondere als Laserbearbeitungskopf, ausgebildet sein. In diesem Fall ist die Auswerteeinrichtung typischer Weise in den Bearbeitungskopf integriert. Bei der Vorrichtung kann es sich auch um eine Bearbeitungsmaschine, insbesondere um eine Laserbearbeitungsmaschine, handeln. In diesem Fall ist die Auswerteeinrichtung typischer Weise vom Bearbeitungskopf separiert angeordnet.

Bei einer Ausführungsform ist die Bilderfassungseinrichtung zur Aufnahme des mindestens einen Bildes mittels eines durch eine Öffnung einer Bearbeitungsdüse zum Durchtritt eines Hochenergiestrahls verlaufenden Beobachtungsstrahlengangs ausgebildet. Die Bilderfassungseinrichtung ist derart angeordnet bzw. ausgerichtet, dass der Beobachtungsstrahlengang durch die Öffnung der Bearbeitungsdüse verläuft, durch die auch ein Hochenergiestrahl, beispielsweise ein Laserstrahl oder ein Plasmastrahl, hindurch tritt, der zur Bearbeitung eines Werkstücks verwendet wird. Für die Realisierung eines solchen Beobachtungsstrahlengangs kann der Bilderfassungseinrichtung eine Abbildungsoptik mit einem oder mehreren geeignet positionierten optischen Elementen, z.B. in Form einer oder mehrerer Linsen, zugeordnet sein.

Bei einer Weiterbildung ist die Bilderfassungseinrichtung ausgebildet, das mindestens eine Bild aus einer Beobachtungsrichtung koaxial zur Längsachse der Bearbeitungsdüse aufzunehmen. Die Strahlachse des Hochenergiestrahls stimmt im Idealfall mit der Längsachse der Bearbeitungsdüse überein, d.h. der Hochenergiestrahl tritt zentrisch durch die Öffnung der Bearbeitungsdüse hindurch. Durch die Beobachtung der typischer Weise senkrecht zur Düsenachse ausgerichteten Referenzfläche koaxial zur Längsachse der Bearbeitungsdüse kann eine richtungsunabhängige Beobachtung realisiert werden, was die Bestimmung des Abstandes deutlich vereinfacht.

Bei einer weiteren Ausführungsform weist die Bilderfassungseinrichtung mindestens eine Detektorfläche auf, an der das mindestens eine Bild erzeugt wird. Die Detektorfläche kann insbesondere an einer Kamera z.B. in Form eines CCD-Chips oder eines CMOS-Chips realisiert sein. Gegebenenfalls kann die Abbildungsoptik ein Strahlteleskop aufweisen, um den Abbildungsquerschnitt auf die verfügbare Detektorfläche anzupassen.

Bei einer weiteren Ausführungsform ist die Beleuchtungseinrichtung ausgebildet, mindestens zwei Beleuchtungsstrahlen zu erzeugen, die aus unterschiedlichen Beleuchtungsrichtungen und/oder unter unterschiedlichen Winkeln durch die Öffnung hindurch treten und die gleichzeitig oder zeitlich versetzt erzeugt werden können. Die Beleuchtungseinrichtung kann zu diesem Zweck zwei oder mehr Beleuchtungsquellen aufweisen, die jeweils einen Beleuchtungsstrahl erzeugen. Es ist aber auch möglich, dass die Beleuchtungseinrichtung nur eine Beleuchtungsquelle, beispielsweise in Form einer Laserdiode oder einer LED, aufweist und den Beleuchtungsstrahlengang geeignet anpasst, um die Ausrichtung des Beleuchtungsstrahls und damit die Beleuchtungsrichtung zu variieren. Gegebenenfalls kann die von einer Beleuchtungsquelle erzeugte Beleuchtungsstrahlung z.B. mittels eines Strahlteilers in zwei Beleuchtungsstrahlen aufgeteilt werden.

Bei einer Ausführungsform beträgt der Winkel, genauer gesagt der Betrag des Winkels, unter dem der Beleuchtungsstrahl durch die Öffnung hindurch tritt, zwischen 2,5° und 25°, bevorzugt zwischen 2,5° und 10°. Der Winkel wird typischer Weise zur Normalenrichtung der Öffnung gemessen, die bei einer an einer Bearbeitungsdüse gebildeten Öffnung mit der Düsenlängsachse übereinstimmt. Der Winkel ist typischer Weise abhängig von der Brechkraft der Fokussiereinrichtung, auf welche der Beleuchtungsstrahl auftrifft, wobei der Winkel idealer Weise so gewählt wird, dass der Beleuchtungsstrahl im Wesentlichen parallel zur typischer Weise konisch zulaufenden Innenseite der Bearbeitungsdüse und idealer Weise ohne Abstand zur Innenseite der Bearbeitungsdüse verläuft. Gegebenenfalls kann ein Randbereich des Beleuchtungsstrahls auf die Oberseite der Bearbeitungsdüse treffen, so dass dieser Randbereich nicht durch die Öffnung der Bearbeitungsdüse tritt. Wesentlich ist, dass der Beleuchtungsstrahl von der Kante bzw. der Innenkontur der Bearbeitungsdüse begrenzt wird, um den Schattenwurf zu erzeugen. Der Winkel, unter dem der Beleuchtungsstrahl durch die Öffnung hindurch tritt, kann hierbei kleiner oder ggf. größer sein als der Winkel, den die Innenkontur der Bearbeitungsdüse mit der Düsenlängsachse einschließt.

Bei einer weiteren Ausführungsform umfasst die Vorrichtung zusätzlich eine Fokussiereinrichtung zur Fokussierung des Hochenergiestrahls, durch welche der mindestens eine Beleuchtungsstrahl außermittig hindurch tritt. Der Beleuchtungsstrahl verläuft bei dieser Ausführungsform nicht entlang einer zentralen Achse der Fokussiereinheit und erfährt daher in der Fokussiereinheit eine Ablenkung bzw. eine Richtungsänderung, so dass der vor dem Eintritt in die Fokussiereinheit typischer Weise parallel zur Strahlachse des Hochenergiestrahls verlaufende Beleuchtungsstrahl nach dem Durchlaufen der Fokussiereinheit unter einem Winkel zur Strahlachse des Hochenergiestrahls verläuft. Es versteht sich, dass die Ausrichtung des mindestens einen Beleuchtungsstrahls unter einem Winkel zur Strahlachse des Bearbeitungsstrahls nicht zwingend an der Fokussiereinheit für den Hochenergiestrahl erfolgen muss, sondern vielmehr auf andere Weise erfolgen kann, beispielsweise indem eine oder mehrere Umlenkeinrichtungen z.B. in Form von Umlenkspiegeln zur schrägen Ausrichtung der Beleuchtungsstrahlen verwendet werden.

Bei einer Weiterbildung umfasst die Vorrichtung zusätzlich einen Lochspiegel zum Durchtritt eines Hochenergiestrahls, insbesondere eines Laserstrahls, wobei die Beleuchtungseinrichtung ausgebildet ist, den mindestens einen Beleuchtungsstrahl auf den Lochspiegel einzustrahlen, um den mindestens einen Beleuchtungsstrahl in eine Richtung parallel zum Hochenergiestrahl zu reflektieren. Der Beleuchtungsstrahl wird auf einen in der Regel planen Randbereich des Lochspiegels eingestrahlt und ist nach der Reflexion parallel zum Hochenergiestrahl ausgerichtet. Aufgrund der Umlenkung am Randbereich des Lochspiegels verläuft der Beleuchtungsstrahl versetzt zur Strahlachse des Hochenergiestrahls und trifft außermittig auf die Fokussiereinrichtung, sofern diese zur schrägen Ausrichtung des Beleuchtungsstrahls genutzt wird.

Die Vorrichtung kann ausgebildet sein, den von der Auswerteeinrichtung bestimmten Abstand zwischen der Referenzfläche, beispielsweise einer Werkstückoberfläche, und der Düsenöffnung einer Bearbeitungsdüse, an eine Regeleinrichtung zu übermitteln. Die Regeleinrichtung kann den Abstand zwischen der Öffnung und der Referenzfläche auf einen Soll-Abstand regeln, der für einen bestimmten Bearbeitungsprozess, z.B. für das Laserschneiden, Laserschweißen etc. sowie für vorgegebene Bearbeitungsparameter wie Werkstückmaterial, Werkstückdicke etc. geeignet ist. Der Soll-Abstand kann z.B. in einem Speicher bzw. in einer Tabelle hinterlegt sein.

Weitere Vorteile der Erfindung ergeben sich aus der Beschreibung und der Zeichnung. Ebenso können die vorstehend genannten und die noch weiter aufgeführten Merkmale je für sich oder zu mehreren in beliebigen Kombinationen Verwendung finden. Die gezeigten und beschriebenen Ausführungsformen sind nicht als abschließende Aufzählung zu verstehen, sondern haben vielmehr beispielhaften Charakter für die Schilderung der Erfindung.

Es zeigen:
- Fig. 1: eine schematische Darstellung eines Ausführungsbeispiels einer Laserbearbeitungsmaschine zur optischen Bestimmung eines Abstandes zwischen einer Öffnung einer Laserbearbeitungsdüse und einem Werkstück,
- Fig. 2a,b: schematische Darstellungen der Laserbearbeitungsdüse von Fig. 1 mit einem Beleuchtungsstrahl, der schräg durch eine Düsenöffnung der Laserbearbeitungsdüse hindurch tritt und einen Bereich des Werkstücks beleuchtet, der zu einer Randkontur der Düsenöffnung versetzt ist, und
- Fig. 3a,b: schematische Darstellungen von zwei durch die Düsenöffnung aufgenommenen Bildern der Referenzfläche bei einem ersten und zweiten Abstand zum Werkstück gemäß Fig. 2a,b.

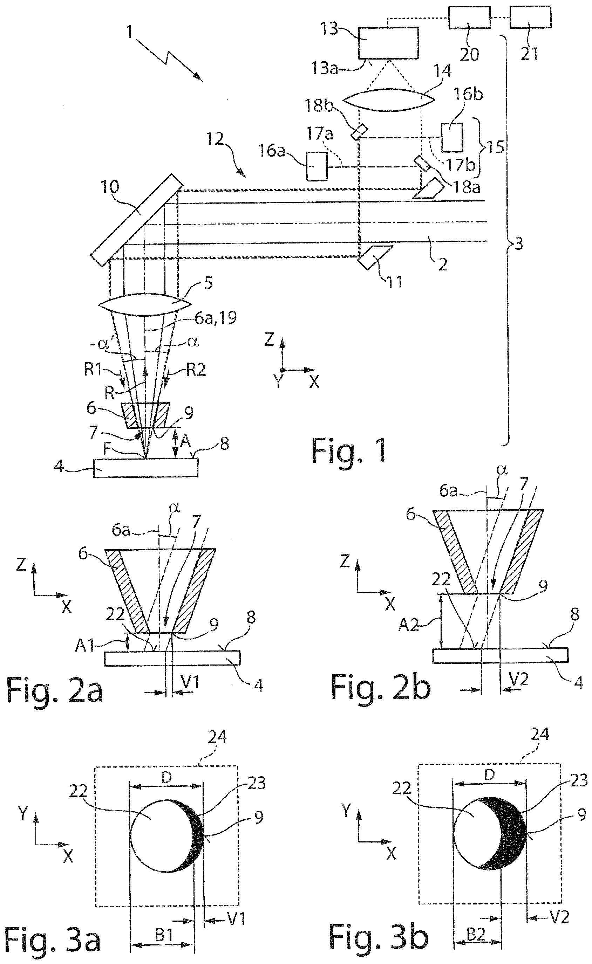

Fig. 1 zeigt einen beispielhaften Aufbau einer Vorrichtung in Form einer Laserbearbeitungsmaschine 1, die einen Bearbeitungskopf 3 zur Fokussierung eines Laserstrahls 2 auf ein von dem Bearbeitungskopf 3 beabstandetes Werkstück 4 umfasst. Der Laserstrahl 2 wird im gezeigten Beispiel von einem CO₂-Laser erzeugt. Alternativ kann der Laserstrahl 2 beispielsweise durch einen Festkörperlaser erzeugt werden. Der Laserstrahl 2 wird zur Durchführung einer Werkstückbearbeitung an dem Werkstück 4, beispielsweise in Form eines Laserschweiß- oder Laserschneidprozesses, mittels einer Fokussiereinrichtung in Form einer Fokussierlinse 5 auf das Werkstück 4 fokussiert.

Der Bearbeitungskopf 3 umfasst des Weiteren eine Bearbeitungsdüse 6, wobei die Fokussierlinse 5 im gezeigten Beispiel den Laserstrahl 2 durch die Bearbeitungsdüse 6, genauer gesagt durch eine Öffnung 7 an der Innenseite der Bearbeitungsdüse 6, auf das Werkstück 4 fokussiert, und zwar auf eine an der Oberseite des Werkstücks 4 gebildete Werkstückoberfläche 8, an welcher der Laserstrahl 2 an einer Fokusposition F auftrifft. Am werkstückseitigen Ende der Öffnung 7 der Bearbeitungsdüse 6 ist eine ringförmig umlaufende Randkontur 9 gebildet. Mittels eine nachfolgend beschriebenen Verfahrens wird ein Abstand A zwischen der Öffnung 7 der Bearbeitungsdüse 6 und einer Werkstückoberfläche 8 des Werkstücks 4 bestimmt. Das Verfahren kann ggf. auch an einer eigens zu diesem Zweck in der Bearbeitungsmaschine 1 vorgesehenen Referenzfläche durchgeführt werden, die nicht an dem Werkstück 4 gebildet ist.

In Fig. 1 ebenfalls zu erkennen ist ein Lochspiegel 11 (Scraper-Spiegel), durch den der von einer Strahlführung einfallende Laserstrahl 2 hindurch tritt und an einem Umlenkspiegel 10 in Richtung auf die Fokussiereinrichtung 5 und auf das Werkstück 4 umgelenkt wird. An einem ringförmigen Randbereich des Lochspiegels 11 wird Beobachtungsstrahlung (beispielsweise im sichtbaren Wellenlängenbereich) eines in Fig. 1 gepunktet dargestellten Beobachtungsstrahlengangs 12 zu einer Bilderfassungseinrichtung 13 in Form einer Kamera umgelenkt bzw. reflektiert. Bei der Bilderfassungseinrichtung 13 kann es sich um eine hochauflösende Kamera handeln, die insbesondere als Hochgeschwindigkeitskamera ausgebildet sein kann. Im dargestellten Beispiel erfolgt die Aufnahme von Bildern durch die Bilderfassungseinrichtung 13 im VIS-Wellenlängenbereich. Auch eine Aufnahme von Bildern im UV-Bereich ist möglich. Bei dem in Fig. 1 gezeigten Beispiel kann ein Filter vor der Bilderfassungseinrichtung 13 angeordnet werden, wenn weitere Strahlungs- bzw. Wellenlängenanteile von der Erfassung mit der Bilderfassungseinrichtung 13 ausgeschlossen werden sollen. Der Filter kann z.B. als schmalbandiger Bandpassfilter ausgebildet sein.

Eine Linse 14 dient gemeinsam mit der Fokussierlinse 5 als Abbildungsoptik zur Abbildung der Werkstückoberfläche 8 auf eine Detektorfläche 13a der Kamera 13. Die Abbildungsoptik bzw. die Kamera 13 sind so angeordnet, dass der Beobachtungsstrahlengang 12 koaxial zur in Fig. 1 strichpunktiert dargestellten Laserstrahlachse 19 bzw. deren Verlängerung verläuft. Da die Laserstrahlachse 19 im Bereich der Düsenöffnung 7 mit der Längsachse 6a der typischer Weise rotationssymmetrischen Bearbeitungsdüse 6 übereinstimmt, erfolgt die Beobachtung der Werkstückoberfläche 8 bzw. die Aufnahme des Bildes der Werkstückoberfläche 8 in einer Beobachtungsrichtung R koaxial zur Düsenöffnung 7 und somit richtungsunabhängig.

Der Bearbeitungskopf 3 umfasst weiterhin eine Beleuchtungseinrichtung 15, die der Beleuchtung der von dem Bearbeitungskopf 3 beabstandeten Werkstückoberfläche 8 dient. Die Beleuchtungseinrichtung 15 weist eine erste und zweite Beleuchtungsquelle 16a,b auf, die jeweils einen in Fig. 1 gestrichelt dargestellten Beleuchtungsstrahl 17a,b erzeugen. Als Beleuchtungsquellen 16a,b können beispielsweise Diodenlaser oder LEDs vorgesehen werden. Die Beleuchtungsstrahlen 17a,b werden über jeweils einen Umlenkspiegel 18a,b an einander diametral gegenüber liegenden Seiten des Randbereichs auf den Lochspiegel 11 eingestrahlt und von diesem reflektiert, d.h. um 90° umgelenkt, so dass die Beleuchtungsstrahlen 17a,b parallel zum Laserstrahl 2 ausgerichtet werden, der den Lochspiegel 11 in X-Richtung durchläuft. Die beiden Umlenkspiegel 18a,b sind teildurchlässig ausgebildet und transmittieren die Beobachtungsstrahlung des Beobachtungsstrahlengangs 12, so dass die Beobachtungsstrahlung durch die Umlenkspiegel 18a,b hindurch zur Kamera 13 gelangen kann.

Bei dem in Fig. 1 gezeigten Beispiel treffen die beiden Beleuchtungsstrahlen 17a, 17b an einander diametral gegenüber liegenden Seiten innerhalb eines ringförmigen Randbereichs auf die Fokussierlinse 5 und werden von dieser umgelenkt, so dass diese unter einem jeweiligen Winkel -a, a, der in der Zeichenebene (XZ-Ebene) gemessen wird, zur Düsenlängsachse 6a bzw. zur Laserstrahlachse 19 verlaufen. Die Beleuchtungsstrahlen 17a, 17b treten daher schräg, d.h. unter einem Winkel -a, α zur Düsenlängsachse 6a durch die Öffnung 7 der Bearbeitungsdüse 6 hindurch. Der Betrag des Winkels a, unter dem der Beleuchtungsstrahl 17a, 17b durch die Öffnung 7 hindurch tritt, liegt typischer Weise zwischen 2,5° und 25°, bevorzugt zwischen 2,5° und 10°. Die Wahl des Winkels α hängt unter anderem von dem Winkel ab, unter dem die konische Innenkontur der Bearbeitungsdüse 6 verläuft, wobei beide Winkel übereinstimmen können, aber nicht zwingend übereinstimmen müssen.

Fig. 2a,b zeigen jeweils einen Schnitt durch die Bearbeitungsdüse 6 von Fig. 1 bei zwei unterschiedlichen Abständen A1, A2 zwischen der Werkstückoberfläche 8 und der Düsenöffnung 7 bei der Beleuchtung des Werkstücks 4 durch den ersten Beleuchtungsstrahl 17a. Wie in Fig. 2a,b zu erkennen ist, wird von dem ersten Beleuchtungsstrahl 17a ein Bereich 22 an der Werkstückoberfläche 8 beleuchtet, der relativ zur Düsenöffnung 7, genauer gesagt zu der Stelle an der Randkontur 9 der Düsenöffnung 7, der in der Einfallsebene des zweiten Beleuchtungsstrahls 17b (XZ-Ebene) liegt, versetzt ist. Wie durch einen Vergleich von Fig. 2a mit Fig. 2b zu erkennen ist, ist der jeweilige Versatz V1, V2 vom Abstand A1, A2 zwischen der Werkstückoberfläche 8 und der Öffnung 7 abhängig, wobei der Versatz V1, V2 mit zunehmendem Abstand A1, A2 zunimmt.

Wie anhand von Fig. 2a,b unschwer zu erkennen ist, gilt für den Abstand A und den Versatz V folgende Beziehung: tan (α) = V / A. Der Abstand A kann von einer Auswerteeinrichtung 20 bestimmt werden, die zu diesem Zweck mit der Kamera 13 in signaltechnischer Verbindung steht. Die Auswerteeinrichtung 20 kann in die Bearbeitungsmaschine 1 beispielsweise in Form eines PCs oder dergleichen integriert sein sowie mit einer Steuer- bzw. Regeleinrichtung 21 in signaltechnischer Verbindung stehen. Die Auswerteeinrichtung 20 bestimmt den Abstand A1, A2 anhand eines jeweiligen von der Kamera 13 aufgenommenen Bildes 24, welches in einer Beobachtungsrichtung R koaxial zur Laserstrahlachse 19 bzw. zur Düsenlängsachse 6a und somit richtungsunabhängig aufgenommen wird.

In Fig. 3a,b ist das jeweils zum ersten Abstand A1 bzw. zum zweiten Abstand A2 gehörige, von der Kamera 13 aufgenommene Bild 24 dargestellt. Die kreisförmige Randkontur 9 der Bearbeitungsdüse 6 bildet eine Begrenzung des Beobachtungsbereichs, durch den die Werkstückoberfläche 8 beobachtet werden kann. In dem durch die Öffnung 7 hindurch erkennbaren Ausschnitt der Werkstückoberfläche 8 ist der beleuchtete Bereich 22 und ein dunkler Bereich 23 zu erkennen, der durch den Schattenwurf der Randkontur 9, d.h. der Düsenkante bedingt ist.

Die Auswerteeinrichtung 20 ermittelt den Versatz V1, V2 zwischen der Randkontur 9 und dem beleuchteten Bereich 22 durch eine geeignete Geometrieerkennung und daraus anhand der oben angegebenen Formel den zugehörigen Abstand A1, A2. Alternativ oder zusätzlich ist es möglich, die Breite B1, B2 des beleuchteten Bereichs 22, genauer gesagt die Breite B1, B2 des durch die Öffnung 7 erkennbaren Ausschnitts des beleuchteten Bereichs 22 in X-Richtung zu bestimmen. Bei bekanntem Düsendurchmesser D kann anhand der Breite B des Ausschnitts des beleuchteten Bereichs 22 der Versatz V = D - B berechnet werden und entsprechend der Formel tan (α) = (D - B) / A der Abstand A bestimmt werden. Es versteht sich, dass an Stelle der Berechnung mittels der obigen Formel der Abstand A auch durch Nachschlagen in einer Tabelle bestimmt werden kann, in der die Beziehung zwischen dem Abstand A und dem Versatz V oder der Breite B des beleuchteten Bereichs 22 für eine Vielzahl von Wertepaaren abgespeichert ist. Insbesondere wenn der Abstand A anhand der Breite B des beleuchteten Bereichs bestimmt wird, ist es günstig, wenn der Beleuchtungsstrahl 17a die Öffnung 7 vollständig ausleuchtet.

Zur Erhöhung der Genauigkeit bei der Bestimmung des Abstandes A kann zusätzlich zum ersten Beleuchtungsstrahl 17a der zweite Beleuchtungsstrahl 17b genutzt werden. Der zweite Beleuchtungsstrahl 17b kann gleichzeitig oder zeitlich versetzt zum ersten Beleuchtungsstrahl 17a von der Beleuchtungseinrichtung 15 aktiviert werden, um die Werkstückoberfläche 8 zu beleuchten. Im ersten Fall werden zwei dunkle Bereiche innerhalb des Bildes 24 erzeugt. Im zweiten Fall kann für den jeweils aktiven Beleuchtungsstrahl 17a, 17b der Versatz V bzw. der Abstand A bestimmt werden und aus den für unterschiedliche Beleuchtungsstrahlen bzw. unterschiedliche Beleuchtungsrichtungen R1, R2 (vgl. Fig. 1) bestimmten Abstandswerten der Abstand A durch Bildung eines Mittelwerts bestimmt werden. Für die Erhöhung der Präzision der Abstandsmessung können die zwei Beleuchtungsstrahlen 17a, 17b alternativ oder zusätzlich zur Verwendung unterschiedlicher Beleuchtungsrichtungen R1, R2 unter im Betrag unterscheidendenden Winkeln a, a' durch die Öffnung 7 hindurch treten, wie in Fig. 1 angedeutet ist (α ≠ α').

Es versteht sich, dass zur Erhöhung der Präzision der Bestimmung des Abstandes A mehr als zwei Beleuchtungsstrahlen 17a, 17b von der Beleuchtungseinrichtung 15 erzeugt werden können, die die Werkstückoberfläche 8 aus mehr als zwei Beleuchtungsrichtungen R1, R2 und/oder mit sich im Betrag voneinander unterscheidenden Winkeln a, a' beleuchten. Die Beleuchtungsrichtungen R1, R2 müssen hierbei nicht wie in Fig. 1 gezeigt in einer gemeinsamen Ebene (XZ-Ebene) bezüglich der Laserstrahlachse 19 bzw. der Düsenlängsachse 6a verlaufen, sondern können auch von 180° verschiedene Winkel in einer Projektion auf die Werkstückoberfläche 8 aufweisen. Beispielsweise können vier Beleuchtungsstrahlen, die in der Projektion in der XY-Ebene jeweils unter einem Winkel von 90° zueinander ausgerichtet sind, durch die Öffnung 7 hindurch treten, um die Werkstückoberfläche 8 aus vier zueinander senkrechten Beleuchtungsrichtungen zu beleuchten.

Anhand des von der Auswerteeinrichtung 20 bestimmten Abstandes A kann die Regeleinrichtung 21 einen Vergleich mit einem Soll-Abstand zwischen der Öffnung 7 bzw. dem Laserbearbeitungskopf 3 und der Werkstückoberfläche 8 durchführen. Sofern eine Abweichung festgestellt wird, kann die Regeleinrichtung 21 auf geeignete Stellglieder (Aktoren) zur Bewegung des Laserbearbeitungskopfs 3 in Z-Richtung einwirken, um den Abstand A zwischen dem Laserbearbeitungskopf 3 und der Werkstückoberfläche 8 auf einen Soll-Abstand zu regeln.

Zusammenfassend kann auf die oben beschriebene Weise die Bestimmung des Abstandes A zwischen dem Bearbeitungskopf 3 und der Werkstückoberfläche 8 einfach und zuverlässig erfolgen, wobei bei der hier vorgeschlagenen optischen Bestimmung des Abstandes im Vergleich zu einer kapazitiven Abstandsbestimmung der Messbereich verkleinert ist, so dass ggf. vorhandene Störkonturen am Werkstück das Messergebnis weniger stark beeinflussen können. Auch kann auf eine aufwändige Kalibrierung verzichtet werden.

## Patentansprüche

1. Verfahren zum optischen Bestimmen eines Abstandes (A) zwischen einer an einer Vorrichtung (1) gebildeten Öffnung (7) und einer Referenzfläche (8), umfassend die Schritte:
Beleuchten der Referenzfläche (8) durch die Öffnung (7) hindurch mittels mindestens eines Beleuchtungsstrahls (17a, 17b), der unter einem Winkel (α, -α'), d.h. schräg, durch die Öffnung (7) hindurchtritt,
Aufnehmen mindestens eines Bildes (24) der Referenzfläche (8) durch die Öffnung (7) hindurch, sowie
Bestimmen des Abstandes (A) anhand eines Versatzes (V) zwischen einem von dem Beleuchtungsstrahl (17a, 17b) beleuchteten Bereich (22) der Referenzfläche (8) und einer Randkontur (9) der Öffnung (7) in dem mindestens einen aufgenommenen Bild (24), wobei die Öffnung (7) an einer Bearbeitungsdüse (6) gebildet ist.

2. Verfahren nach Anspruch 1, bei dem das mindestens eine Bild (24) entlang einer Beobachtungsrichtung (R) koaxial zu einer Düsenachse (6a) der Bearbeitungsdüse (6) aufgenommen wird.

3. Verfahren nach Anspruch 1 oder 2, bei dem die Öffnung (7) von dem mindestens einen Beleuchtungsstrahl (17a, 17b) vollständig ausgeleuchtet wird.

4. Verfahren nach einem der vorhergehenden Ansprüche, bei dem der Winkel (α), unter dem der Beleuchtungsstrahl (17a, 17b) durch die Öffnung hindurch tritt, zwischen 2,5° und 25° beträgt.

5. Verfahren nach einem der vorhergehenden Ansprüche, bei dem mindestens zwei Beleuchtungsstrahlen (17a, 17b) gleichzeitig oder zeitlich versetzt aus unterschiedlichen Beleuchtungsrichtungen (R1, R2) und/oder unter unterschiedlichen Winkeln (α, α') durch die Öffnung (7) hindurch treten.

6. Verfahren nach einem der vorhergehenden Ansprüche, bei dem der mindestens eine Beleuchtungsstrahl (17a, 17b) vor dem Erreichen der Öffnung (7) außermittig durch eine Fokussiereinrichtung (5) hindurchtritt.

7. Verfahren nach Anspruch 6, bei dem der mindestens eine Beleuchtungsstrahl (17a, 17b) vor dem Erreichen der Fokussiereinrichtung (5) parallel zu einem durch die Öffnung (7) hindurch tretenden Hochenergiestrahl, insbesondere einem Laserstrahl (2), verläuft.

8. Verfahren nach Anspruch 7, bei dem der mindestens eine Beleuchtungsstrahl (17a, 17b) an einem Lochspiegel (11) zum Durchtritt des Hochenergiestrahls (2) in eine Richtung parallel zum Hochenergiestrahl (2) umgelenkt wird.

9. Verfahren nach einem der vorhergehenden Ansprüche, bei dem die Referenzfläche eine Werkstückoberfläche (8) ist.

10. Computerprogrammprodukt, welches Codemittel aufweist, die zur Durchführung aller Schritte des Verfahrens nach einem der vorhergehenden Ansprüche angepasst sind, wenn das Computerprogramm auf einer Datenverarbeitungsanlage abläuft.

11. Vorrichtung zur optischen Bestimmung eines Abstandes (A) zwischen einer an der Vorrichtung (1) gebildeten Öffnung (7) und einer Referenzfläche (8), umfassend:
eine Beleuchtungseinrichtung (15) zur Erzeugung mindestens eines Beleuchtungsstrahls (17a, 17b), der unter einem Winkel (α, -α'), d.h. schräg, durch die Öffnung (7) hindurch tritt, um die Referenzfläche (8) zu beleuchten,
eine Bilderfassungseinrichtung (13) zur Aufnahme mindestens eines Bildes (24) der Referenzfläche (8) mittels eines durch die Öffnung (7) hindurch verlaufenden Beobachtungsstrahlengangs (12), eine Auswerteeinrichtung (20) zur Bestimmung des Abstandes (A) anhand eines Versatzes (V) zwischen einem von dem mindestens einen Beleuchtungsstrahl (17a, 17b) beleuchteten Bereich (22) der Referenzfläche (8) und einer Randkontur (9) der Öffnung (7) in dem mindestens einen aufgenommenen Bild (24), sowie eine Bearbeitungsdüse, wobei die Öffnung (7) an der Bearbeitungsdüse (6) gebildet ist.

12. Vorrichtung nach Anspruch 11, bei welcher die Bilderfassungseinrichtung (13) zur Aufnahme des mindestens einen Bildes (24) mittels eines durch eine Öffnung (7) einer Bearbeitungsdüse (6) zum Durchtritt eines Hochenergiestrahls (2) verlaufenden Beobachtungsstrahlengangs (12) ausgebildet ist.

13. Vorrichtung nach Anspruch 12, bei welcher die Bilderfassungseinrichtung (13) ausgebildet ist, das mindestens eine Bild (24) aus einer Beobachtungsrichtung (R) koaxial zur Längsachse (6a) der Bearbeitungsdüse (6) aufzunehmen.

14. Vorrichtung nach Anspruch 11 oder 12, bei welcher die Bilderfassungseinrichtung (13) mindestens eine Detektorfläche (13a) aufweist, an der das mindestens eine Bild (24) erzeugt wird.

15. Vorrichtung nach einem der Ansprüche 11 bis 14, bei welcher die Beleuchtungseinrichtung (15) ausgebildet ist, mindestens zwei Beleuchtungsstrahlen (17a, 17b) zu erzeugen, die aus unterschiedlichen Beleuchtungsrichtungen (R1, R2) und/oder unter unterschiedlichen Winkeln (α, α') durch die Öffnung (7) hindurch treten.

16. Vorrichtung nach einem der Ansprüche 11 bis 15, bei welcher der Winkel (α), unter dem der Beleuchtungsstrahl (17a, 17b) durch die Öffnung hindurch tritt, zwischen 2,5° und 25° beträgt.

17. Vorrichtung nach einem der Ansprüche 11 bis 16, weiter umfassend: eine Fokussiereinrichtung (5), durch welche der mindestens eine Beleuchtungsstrahl (17a, 17b) außermittig hindurch tritt.

18. Vorrichtung nach einem der Ansprüche 11 bis 17, weiter umfassend: einen Lochspiegel (11) zum Durchtritt eines Hochenergiestrahls (2), wobei die Beleuchtungseinrichtung (15) ausgebildet ist, den mindestens einen Beleuchtungsstrahl (17a, 17b) auf den Lochspiegel (11) einzustrahlen, um den mindestens einen Beleuchtungsstrahl (17a, 17b) in eine Richtung (X) parallel zum Hochenergiestrahl (2) zu reflektieren.

## Claims

1. Method for optically determining a distance (A) between an aperture (7) formed at an apparatus (1) and a reference surface (8), including the steps of:
illuminating the reference surface (8) through the aperture (7) by means of at least one illumination beam (17a, 17b), which passes through the aperture (7) at an angle (α, -α'), i.e., obliquely, recording at least one image (24) of the reference surface (8) through the aperture (7), and
determining the distance (A) on the basis of an offset (V) between a region (22), illuminated by the illumination beam (17a, 17b), of the reference surface (8) and an edge contour (9) of the aperture (7) in the at least one recorded image (24), wherein the aperture (7) is formed at a processing nozzle (6).

2. Method according to Claim 1, wherein the at least one image (24) is recorded along an observation direction (R) that is coaxial to a nozzle axis (6a) of the processing nozzle (6).

3. Method according to Claim 1 or 2, wherein the aperture (7) is completely illuminated by the at least one illumination beam (17a, 17b).

4. Method according to any one of the preceding claims, wherein the angle (α) at which the illumination beam (17a, 17b) passes through the aperture is between 2.5° and 25°.

5. Method according to any one of the preceding claims, wherein at least two illumination beams (17a, 17b) pass through the aperture (7) from different illumination directions (R1, R2) and/or at different angles (α, α'), either at the same time or with a time offset.

6. Method according to any one of the preceding claims, wherein the at least one illumination beam (17a, 17b) passes through a focusing device (5) off-centre prior to reaching the aperture (7).

7. Method according to Claim 6, wherein, prior to reaching the focusing device (5), the at least one illumination beam (17a, 17b) extends parallel to a high energy beam, in particular a laser beam (2), that passes through the aperture (7).

8. Method according to Claim 7, wherein the at least one illumination beam (17a, 17b) is deflected into a direction parallel to the high energy beam (2) at a punctured mirror (11) provided for the passage of the high energy beam (2).

9. Method according to any one of the preceding claims, wherein the reference surface is a workpiece surface (8).

10. Computer program product having code means adapted to carry out all steps of the method according to any one of the preceding claims when the computer program runs on data processing system.

11. Apparatus for optically determining a distance (A) between an aperture (7) formed at the apparatus (1) and a reference surface (8), comprising:
an illumination device (15) for producing at least one illumination beam (17a, 17b) which passes through the aperture (7) at an angle (α, -α'), i.e., obliquely, in order to illuminate the reference surface (8),
an image capture device (13) for recording at least one image (24) of the reference surface (8) by means of an observation beam path (12) that passes through the aperture (7),
an evaluation device (20) for determining the distance (A) on the basis of an offset (V) between a region (22), illuminated by the illumination beam (17a, 17b), of the reference surface (8) and
an edge contour (9) of the aperture (7) in the at least one recorded image (24), and a processing nozzle, wherein the aperture (7) is formed at the processing nozzle (6).

12. Apparatus according to Claim 11, wherein the image capture device (13) is embodied to record the at least one image (24) by means of an observation beam path (12) that extends through an aperture (7) of a processing nozzle (6) for the passage of a high energy beam (2).

13. Apparatus according to Claim 12, wherein the image capture device (13) is embodied to record the at least one image (24) from an observation direction (R) that is coaxial to the longitudinal axis (6a) of the processing nozzle (6).

14. Apparatus according to Claim 11 or 12, wherein the image capture device (13) has at least one detector area (13a), at which the at least one image (24) is produced.

15. Apparatus according to any one of Claims 11 to 14, wherein the illumination device (15) is embodied to produce at least two illumination beams (17a, 17b), which pass through the aperture (7) from different illumination directions (R1, R2) and/or at different angles (α, α').

16. Apparatus according to any one of Claims 11 to 15, wherein the angle (α) at which the illumination beam (17a, 17b) passes through the aperture is between 2.5° and 25°.

17. Apparatus according to any one of Claims 11 to 16, further comprising: a focusing device (5), through which the at least one illumination beam (17a, 17b) passes off-centre.

18. Apparatus according to any one of Claims 11 to 17, further comprising: a punctured mirror (11) for the passage of a high energy beam (2), wherein the illumination device (15) is embodied to radiate the at least one illumination beam (17a, 17b) onto the punctured mirror (11) in order to reflect the at least one illumination beam (17a, 17b) in a direction (X) parallel to the high energy beam (2) .

## Revendications

1. Procédé de détermination optique d'une distance (A) entre une ouverture (7) formée sur un dispositif (1) et une surface de référence (8), comprenant les étapes consistant à :
éclairer la surface de référence (8) à travers l'ouverture (7) au moyen d'au moins un faisceau d'éclairage (17a, 17b) qui passe à travers l'ouverture (7) selon un angle (α, -α'), c.-à-d. obliquement,
prendre au moins une image (24) de la surface de référence (8) à travers l'ouverture (7), et
déterminer la distance (A) à l'aide d'un décalage (V) entre une zone (22) de la surface de référence (8) éclairée par le faisceau d'éclairage (17a, 17b) et un contour de bord (9) de l'ouverture (7) dans ladite au moins une image prise (24), l'ouverture (7) étant formée sur une buse d'usinage (6).

2. Procédé selon la revendication 1, dans lequel ladite au moins une image (24) est prise le long d'une direction d'observation (R) coaxiale à un axe de buse (6a) de la buse d'usinage (6).

3. Procédé selon la revendication 1 ou 2, dans lequel l'ouverture (7) est entièrement éclairée par ledit au moins un faisceau d'éclairage (17a, 17b).

4. Procédé selon l'une des revendications précédentes, dans lequel l'angle (α) selon lequel le faisceau d'éclairage (17a, 17b) passe à travers l'ouverture est compris entre 2,5° et 25°.

5. Procédé selon l'une des revendications précédentes, dans lequel au moins deux faisceaux d'éclairage (17a, 17b) passent à travers l'ouverture (7) simultanément ou de manière décalée dans le temps à partir de directions d'éclairage différentes (R1, R2) et/ou selon des angles différents (α, α').

6. Procédé selon l'une des revendications précédentes, dans lequel ledit au moins un faisceau d'éclairage (17a, 17b) passe excentriquement à travers un moyen de focalisation (5) avant d'atteindre l'ouverture (7).

7. Procédé selon la revendication 6, dans lequel ledit au moins un faisceau d'éclairage (17a, 17b) s'étend parallèlement à un faisceau à haute énergie, en particulier un faisceau laser (2), passant à travers l'ouverture (7) avant d'atteindre le moyen de focalisation (5).

8. Procédé selon la revendication 7, dans lequel ledit au moins un faisceau d'éclairage (17a, 17b) est dévié dans une direction parallèle au faisceau à haute énergie (2) sur un miroir perforé (11) destiné au passage du faisceau à haute énergie (2).

9. Procédé selon l'une des revendications précédentes, dans lequel la surface de référence est une surface de pièce (8).

10. Produit programme informatique qui présente des moyens de code adaptés à mettre en oeuvre toutes les étapes du procédé selon l'une des revendications précédentes lorsque le programme informatique s'exécute sur un système de traitement de données.

11. Dispositif de détermination optique d'une distance (A) entre une ouverture (7) formée sur le dispositif (1) et une surface de référence (8), comprenant :
un moyen d'éclairage (15) pour générer au moins un faisceau d'éclairage (17a, 17b) qui passe à travers l'ouverture (7) selon un angle (α, -α'), c'est-à-dire obliquement, pour éclairer la surface de référence (8),
un moyen de prise d'image (13) pour prendre au moins une image (24) de la surface de référence (8) au moyen d'un trajet de faisceau d'observation (12) s'étendant à travers l'ouverture (7),
un moyen d'évaluation (20) pour déterminer la distance (A) à l'aide d'un décalage (V) entre une zone (22) de la surface de référence (8) éclairée par ledit au moins un faisceau d'éclairage (17a, 17b) et un contour de bord (9) de l'ouverture (7) dans ladite au moins une image prise (24), et
une buse d'usinage, l'ouverture (7) étant formée sur la buse d'usinage (6).

12. Dispositif selon la revendication 11, dans lequel le moyen de prise d'image (13) est conçu pour prendre ladite au moins une image (24) au moyen d'un trajet de faisceau d'observation (12) s'étendant à travers une ouverture (7) d'une buse d'usinage (6) destinée au passage d'un faisceau à haute énergie (2).

13. Dispositif selon la revendication 12, dans lequel le moyen de prise d'image (13) est conçu pour prendre ladite au moins une image (24) à partir d'une direction d'observation (R) coaxiale à l'axe longitudinal (6a) de la buse d'usinage (6).

14. Dispositif selon la revendication 11 ou 12, dans lequel le moyen de prise d'image (13) présente au moins une surface de détection (13a) sur laquelle ladite au moins une image (24) est générée.

15. Dispositif selon l'une des revendications 11 à 14, dans lequel le moyen d'éclairage (15) est conçu pour générer au moins deux faisceaux d'éclairage (17a, 17b) qui passent à travers l'ouverture (7) à partir de directions d'éclairage différentes (R1, R2) et/ou selon des angles différents (α, α').

16. Dispositif selon l'une des revendications 11 à 15, dans lequel l'angle (α) selon lequel le faisceau d'éclairage (17a, 17b) passe à travers l'ouverture est compris entre 2,5° et 25°.

17. Dispositif selon l'une des revendications 11 à 16, comprenant en outre : un moyen de focalisation (5) à travers lequel ledit au moins un faisceau d'éclairage (17a, 17b) passe excentriquement.

18. Dispositif selon l'une des revendications 11 à 17, comprenant en outre : un miroir perforé (11) destiné au passage d'un faisceau à haute énergie (2), le moyen d'éclairage (15) étant conçu pour irradier ledit au moins un faisceau d'éclairage (17a, 17b) sur le miroir perforé (11) pour réfléchir ledit au moins un faisceau d'éclairage (17a, 17b) dans une direction (X) parallèle au faisceau à haute énergie (2).
